# EUROPÄISCHE PATENTSCHRIFT

(11) **EP 0 777 824 B1**
(45) Veröffentlichungstag und Bekanntmachung des Hinweises auf die Patenterteilung: **04.03.1998**
(21) Anmeldenummer: 95926954.9
(22) Anmeldetag: 19.07.1995
(51) Int. Cl.: F01N 3/20

(54) **ABGASSYSTEM FÜR EINE VERBRENNUNGSKRAFTMASCHINE**
EXHAUST-GAS SYSTEM FOR AN INTERNAL-COMBUSTION ENGINE
SYSTEME D'ECHAPPEMENT POUR MOTEUR A COMBUSTION INTERNE

(30) Priorität: 23.08.1994 DE 4429878
(43) Veröffentlichungstag der Anmeldung: 11.06.1997
(73) Patentinhaber: Emitec Gesellschaft für Emissionstechnologie mbH, 53797 Lohmar (DE)
(72) Erfinder: BRÜCK, Rolf, D-51427 Bergisch Gladbach (DE)
(74) Vertreter: Kahlhöfer, Hermann, Dipl.-Phys.
(86) Internationale Anmeldenummer: EP9502842
(87) Internationale Veröffentlichungsnummer: WO9606269

(56) Entgegenhaltungen:
- EP-A- 0 503 445
- EP-A- 0 569 109
- WO-A-92/13636
- DE-A- 3 137 746
- DE-A- 3 822 944
- DE-A- 4 206 310
- DE-A- 4 229 954
- US-A- 4 550 795
- US-A- 4 756 561
- PATENT ABSTRACTS OF JAPAN vol. 18 no. 196 (M-1589) ,6.April 1994 & JP,A,06 002534 (MAZDA MOTOR CORP) 11.Januar 1994,

## Beschreibung

Die Erfindung geht aus von einem Abgassystem für eine Verbrennungskraftmaschine, insbesondere für eine Verbrennungskraftmaschine eines Fahrzeuges, vorzugsweise für einen Otto-Motor eines Fahrzeuges, mit einer im Abgassystem angeordneten, katalytisch wirkenden Einrichtung, die wenigstens ein elektrisch leitendes Gehaüse und einen darin angeordneten, elektrisch beheizbaren, vom Abgas durchströmbaren Wabenkörper aufweist, der über elektrische Leitungen mit am Gehäuse ausgebildeten Anschlüssen verbunden ist.

Durch die WO 92/02714 ist ein elektrisch beheizbarer Wabenkörper, insbesondere Katalysator-Trägerkörper, wie er insbesondere zur Verringerung des Schadstoffausstoßes in der Kaltstartphase eines Otto-Motors in Kraftfahrzeugen eingesetzt werden kann.

Ein solcher Wabenkörper ist in einem Gehäuse aus einem elektrisch leitenden Werkstoff angeordnet, welches mit elektrischen Anschlüssen für den elektrisch beheizbaren Wabenkörper ausgebildet ist.

Die elektrischen Anschlüsse sind so ausgebildet, daß ein elektrischer Kontakt zwischen einem Anschluß und dem Gehäuse der katalytisch wirkenden Einrichtung vermieden werden soll. Diese Bestrebung kann jedoch nicht immer zuverlässig erfüllt werden. Im rauhen Betrieb eines Kraftfahrzeuges kann es z. B. durch Beschädigungen der Kabelisolierung zu einem elektrischen Kontakt zwischen der elektrischen Leitung und dem Gehäuse kommen. Kommt es zu einem elektrischen Kontakt zwischen der ein höheres elektrisches Potential führenden Leitung und dem Gehäuse, so kann ein Spannungsüberschlag eintreten, der zu einer Beschädigung des Anschlusses führen kann. Der Spannungsüberschlag entsteht, da das Gehäuse mit dem Auspuffsystem elektrisch verbunden ist und das Auspuffsystem über die Verbrennungskraftmaschine auf Massepotential liegt. Die Beschädigung der Anschlüsse kann dazu führen, daß eine Beheizbarkeit des Wabenkörpers nicht mehr oder nur sehr unbefriedigend erfolgen kann.

Die bisher bekannten Wabenkörper werden mit einer Betriebsspannung von ca. 12 V betrieben. Es bestehen jedoch Bestrebungen den Wabenkörper bei höheren Betriebsspannungen zu betreiben. Bei höheren Betriebsspannungen ist die Gefahr eines Spannungsüberschlags noch größer.

Hiervon ausgehend liegt der vorliegenden Erfindung die Aufgabe zugrunde, das bekannte Abgassystem so weiterzubilden, daß insbesondere bei Beschädigungen der elektrischen Anschlüsse am Gehäuse einer katalytisch wirkenden Einrichtung, die im Abgassystem integriert angeordnet ist, Spannungsüberschläge vermieden werden sollen.

Diese Aufgabe wird erfindungsgemäß durch die Merkmale des Anspruchs 1 gelöst. Vorteilhafte Weiterbildungen sind Gegenstand der Unteransprüche.

Gemäß dem erfinderischen Gedanken wird vorgeschlagen, die katalytisch wirkende Einrichtung, die im Abgassystem für eine Verbrennungskraftmaschine angeordnet ist, gegenüber dem Abgassystem elektrisch zu entkoppeln. Durch diese Maßnahme wird sichergestellt, daß die Einrichtung auf einem potentialfreien Niveau ist. Dadurch, daß die Einrichtung potentialfrei ist, kann es zu Spannungsüberschlägen zwischen einem elektrischen Anschluß und der Einrichtung nicht kommen.

Bei Kraftfahrzeugen, insbesondere bei Automobilen, wird das Abgassystem teilweise mittels Befestigungselementen an der Fahrzeugbodengruppe angeordnet. Das Abgassystem ist mit ihrem vorderen Ende fest mit dem Motor verbunden. Bei den Befestigungselementen handelt es sich insbesondere um Ringe aus einem elastischen, elektrisch isolierenden Werkstoff. Es wird daher vorgeschlagen, gemäß einer weiteren vorteilhaften Weiterbildung das Gehäuse gegenüber dem Abgassystem eintrittsseitig zu isolieren. Durch diese Maßnahme wird die bereits vorhandene elektrische Isolierung zum Fahrzeug hin ausgenutzt, so daß das Gehäuse nur noch einseitig gegenüber dem Abgassystem elektrisch isoliert werden muß.

Es sind Abgassysteme bekannt, bei denen vor und hinter einer katalytisch wirkenden Einrichtung sogenannte Lambda-Sonden angeordnet sind. Diese Sonden führen über elektrische Leitungen ein Steuerungsimpuls zu einer Motorsteuerung. Es ist daher von Vorteil, wenn das gesamte Gehäuse zum Abgassystem hin elektrisch isoliert ist, so daß hierdurch das Gehäuse durch die vorhandenen Lambda-Sonden nicht auf ein bestimmtes Potential gesetzt wird.

Die elektrische Entkopplung der Einrichtung gegenüber dem Abgassystem kann dadurch erreicht werden, daß an den Verbindungsstellen der Einrichtung mit den weiteren Komponenten des Abgassystems eine elektrisch isolierende Zwischenlage angeordnet ist.

Bei der elektrisch isolierenden Zwischenlage kann es sich um eine Scheibe handeln, die aus einem keramischen Werkstoff oder aus einem Kunststoff besteht. Diese Zwischenlage muß nicht nur elektrisch isolierend wirken, sondern auch hohen Temperaturen im Abgassystem standhalten.

Ausführungsbeispiele, vorteilhafte Ausgestaltungen und Anwendungsmöglichkeiten der Erfindung werden anhand der Zeichnung beschrieben, ohne daß die Erfindung auf diese Beispiele beschränkt ist. Es zeigt:
Figur 1 schematisch den Aufbau eines Abgassystems und
Figur 2 einen Längsschnitt durch einen Katalysator.

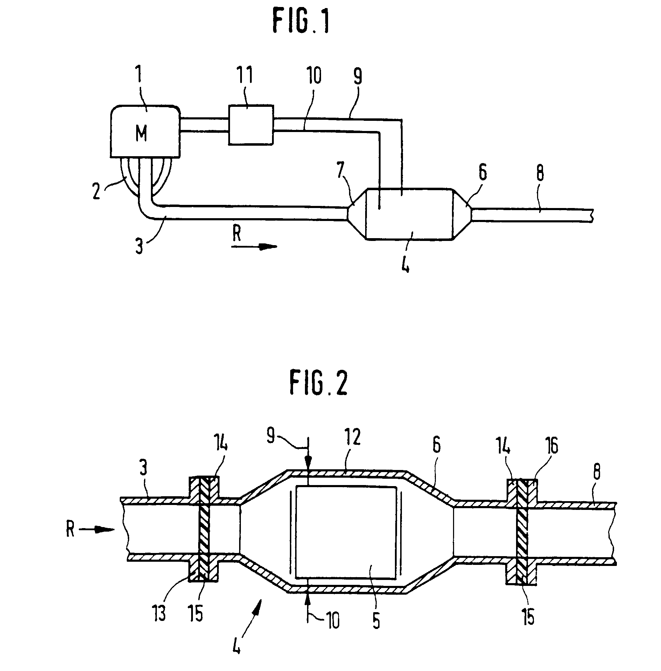

In der Figur 1 ist schematisch der Aufbau eines Abgassystems für einen Otto-Motor 1 eines Fahrzeuges dargestellt. Die Auslaßkanäle des Motors 1 sind über einen Fächerkrümmer 2 mit einem Rohr 3 verbunden. Das Rohr 3 bildet einen Abgasstrang, in dem mehrere Schalldämpfer, die nicht dargestellt sind, angeordnet sein können. Mit dem Abgasrohr 3 ist in Strömungsrichtung R des Abgases eine katalytisch wirkende Einrichtung, nachfolgend Katalysator genannt, 4 angeordnet. Auf der Eintrittsseite 7 des Katalysators 4 ist der Wabenkörper 5 elektrisch beheizbar. Die Gasaustrittsseite 6 des Katalysators 4 ist mit einem Rohr 8 verbunden, durch das das Abgas das Abgassystem verläßt. Der Wabenkörper 5 ist über elektrische Leitungen 9, 10 mit einer Spannungsquelle 11 verbunden. Bei der Spannungsquelle 11 kann es sich um eine Batterie und/oder einen Generator (Lichtmaschine) handeln. Die Anschlüsse der Leitungen 9, 10 sind gegenüber dem Gehäuse 12 des Katalysators 4 elektrisch isoliert.

Wie aus der Figur 2 ersichtlich, ist das Rohr 3 mit einem Anschlußflansch 13 ausgebildet. Das Gehäuse 12 weist einen Anschlußflansch 14 auf. Zwischen den Anschlußflanschen 13, 14 ist eine isolierende Schicht 15 angeordnet. Der Katalysator 4 ist austrittsseitig ebenfalls mit einem Flansch 14 versehen, der mechanisch mit einem Flansch 16 am Rohr 8 verbindbar ist. Zwischen den Flanschen 14, 16 ist eine elektrisch isolierende Schicht 15 vorgesehen.

Durch die elektrisch isolierenden Schichten ist der Katalysator 4 gegenüber dem Abgassystem elektrisch entkoppelt. Das Gehäuse des Katalysators 4 ist potentialfrei.

### Bezugszeichenliste

- 1: Motor
- 2: Fächerkrümmer
- 3: Rohr
- 4: Katalysator
- 5: Wabenkörper
- 6: Eintrittsseite
- 7: Austrittsseite
- 8: Rohr
- 9,10: Leitung
- 11: Spannungsquelle
- 12: Gehäuse
- 13, 14: Anschlußflansch
- 15: isolierende Schicht

## Patentansprüche

1. Abgassystem für eine Verbrennungskraftmaschine, insbesondere eine Verbrennungskraftmaschine eines Fahrzeuges, vorzugsweise für einen Ottomotor eines Fahrzeuges, mit einer im Abgassystem angeordneten, katalytisch wirkenden Einrichtung (4), die wenigstens ein elektrisch leitendes Gehäuse (12) und einen darin angeordneten, elektrisch beheizbaren, vom Abgas durchströmbaren Wabenkörper (5) aufweist, der über elektrische Leitungen (9, 10) mit am Gehäuse (12) ausgebildeten Anschlüssen verbunden ist, dadurch gekennzeichnet, daß die Einrichtung (4) gegenüber dem übrigen Abgassystem elektrisch entkoppelt ist.

2. Abgassystem nach Anspruch 1, wobei das Abgassystem teilweise mittels Befestigungselementen aus einem elektrisch isolierendem Werkstoff am Fahrzeug angeordnet ist, dadurch gekennzeichnet, daß das Gehäuse (12) gegenüber dem Abgassystem elektrisch isoliert ist.

3. Abgassystem nach Anspruch 2, dadurch gekennzeichnet, daß das Gehäuse (12) eintritts- und/oder austrittsseitig (7, 6) mit einer Isolationsschicht versehen ist.

4. Abgassystem nach Anspruch 2, dadurch gekennzeichnet, daß zwischen der Einrichtung (4) und den benachbarten Komponenten des Abgassystems eine elektrisch isolierende Zwischenlage (15) angeordnet ist.

5. Abgassystem nach Anspruch 3 oder 4, dadurch gekennzeichnet, daß die Isolationsschicht oder die Zwischenlage (15) aus einem keramischen Werkstoff besteht.

6. Abgassystem nach Anspruch 3 oder 4, dadurch gekennzeichnet, daß die Isolationsschicht oder die Zwischenlage (15) aus einem Kunststoff besteht.

## Claims

1. An exhaust system for an internal combustion engine, in particular an internal combustion engine of a vehicle, preferably for an Otto cycle engine of a vehicle, comprising a catalytically active device (4) which is arranged in the exhaust system and which has at least one electrically conductive housing (12) and an electrically heatable honeycomb body (5) which is arranged therein and through which the exhaust gas can flow and which is connected by way of electrical lines (9, 10) to connections provided on the housing (12) characterised in that the device (4) is electrically decoupled with respect to the rest of the exhaust system.

2. An exhaust system according to claim 1 wherein the exhaust system is arranged on the vehicle partially by means of fixing elements comprising an electrically insulating material characterised in that the housing (12) is electrically insulated relative to the exhaust system.

3. An exhaust system according to claim 2 characterised in that the housing (12) is provided with an insulating layer at the inlet and/or outlet ends (7, 6).

4. An exhaust system according to claim 2 characterised in that an electrically insulating intermediate layer (15) is arranged between the device (4) and the adjacent components of the exhaust system.

5. An exhaust system according to claim 3 or claim 4 characterised in that the insulating layer or the intermediate layer (15) comprises a ceramic material.

6. An exhaust system according to claim 3 or claim 4 characterised in that the insulating layer or the intermediate layer (15) comprises a plastics material.

## Revendications

1. Système de gaz d'échappement destiné à un moteur à combustion interne, notamment à un moteur à combustion interne d'un véhicule, de préférence à un moteur Otto d'un véhicule, avec un dispositif (4) à effet catalytique disposé dans le système de gaz d'échappement, comportant au moins un carter (12) électriquement conducteur et, disposé dans ce dernier, un corps alvéolaire (5) pouvant être chauffé électriquement qui peut être traversé par les gaz d'échappement, qui est relié à des bornes prévues sur le carter (12) par l'intermédiaire de lignes électriques (9, 10), caractérisé en ce que le dispositif (4) est découplé électriquement par rapport au reste du système de gaz d'échappement.

2. Système de gaz d'échappement selon la revendication 1, le système de gaz d'échappement étant partiellement disposé sur le véhicule au moyen d'éléments de fixation en un matériau électriquement isolant, caractérisé en ce que le carter (12) est isolé électriquement par rapport au système de gaz d'échappement.

3. Système de gaz d'échappement selon la revendication 2, caractérisé en ce que le carter (12) est pourvu d'une couche isolante du côté entrée et/ou du côté sortie (7, 6).

4. Système de gaz d'échappement selon la revendication 2, caractérisé en ce qu'une couche intermédiaire (15) électriquement isolante est disposée entre le dispositif (4) et les composants voisins du système de gaz d'échappement.

5. Système de gaz d'échappement selon la revendication 3 ou 4, caractérisé en ce que la couche isolante ou la couche intermédiaire (15) est constituée d'un matériau en céramique.

6. Système de gaz d'échappement selon la revendication 3 ou 4, caractérisé en ce que la couche isolante ou la couche intermédiaire (15) est constituée d'une matière plastique.
